# EUROPÄISCHE PATENTSCHRIFT

(11) **EP 1 577 006 B1**
(45) Veröffentlichungstag und Bekanntmachung des Hinweises auf die Patenterteilung: **19.10.2011**
(21) Anmeldenummer: 05005244.8
(22) Anmeldetag: 10.03.2005
(51) Int. Cl.: B01J 19/32

(54) **Geordnete Packung für Wärme- und/oder Stoffaustausch**
Structured Packing for heat and mass exchange
Elément de remplissage structuré pour échange de chaleur et de matière

(30) Priorität: 17.03.2004 DE 102004013381
(43) Veröffentlichungstag der Anmeldung: 21.09.2005
(73) Patentinhaber: JULIUS MONTZ GmbH, D-40723 Hilden (DE)
(72) Erfinder: Zich, Egon, 42799 Leichlingen (DE); Jansen, Helmut, 41542 Dormagen (DE); Rietfort, Thomas, 46236 Bottrop (DE); Kaibel, Björn, 40724 Hilden (DE)
(74) Vertreter: Cohausz Hannig Borkowski Wißgott

(56) Entgegenhaltungen:
- EP-A- 0 807 462
- DE-A1- 2 510 275
- DE-C- 666 465
- US-A- 5 942 164
- US-A- 6 071 593

## Beschreibung

Die Erfindung betrifft eine Packung einer Kolonne für den Wärme- und/oder Stoffaustausch mit einzelnen insbesondere waagerechten Packungslagen.

In der europäischen Patentanmeldung EP 1 074 296 ist eine speziell geordnete Packung beschrieben, bei der die einzelnen Packungslagen jeweils aus zwei einzelnen Packungslagen mit unterschiedlicher Geometrie zusammengesetzt sind. Dabei wird jeweils eine unten angeordnete Packungslage mit enger Geometrie mit einer oben angeordneten Packungslage mit weiter Geometrie kombiniert. Die Packungen werden so betrieben, dass die untere Packungslage jeweils in einem Sprudelzustand mit hohem Stoffaustausch gefahren wird. Die darüber angeordnete grobe Packungslage wirkt als Tropfenabscheider und erfüllt zusätzlich die Funktion einer mit einem Flüssigkeitsfilm überströmten konventionellen Packung.

In der deutschen Patentanmeldung DE 100 10 810 A1 ist eine spezielle Packung beschrieben, bei der einzelne Packungslagen mit enger Geometrie mit Packungslagen mit weiter Geometrie kombiniert werden. Die Packungen werden so betrieben, dass die Packungslagen mit enger Geometrie gezielt in einen Sprudelzustand versetzt werden und dadurch die Flüssigkeit über den Kolonnenquerschnitt gleichmäßig verteilt wird.

Bei der Verwendung dieser beiden Packungssysteme zeigt sich eine deutliche Empfindlichkeit der Packungslagen mit enger Geometrie gegen einen nicht exakt horizontalen Einbau. Werden größere Kolonnen ab einem Durchmesser von 1 m und mehr bestückt, führt die Schiefstellung zu unterschiedlich hohen Flüssigkeitsständen auf den engen Packungslagen. An Stellen mit größeren Flüssigkeitsstauhöhen wird der Gasstrom stärker behindert, wodurch eine ungleichmäßige Gasströmung entsteht. Beide Fehlverteilungen führen zu Einbußen in der Wirksamkeit der Kolonnenpackung.

Aufgabe der Erfindung ist es, eine Packung der eingangs genannten Art so zu verbessern, dass ein Wärme und/oder Stoffaustausch mit hoher Wirksamkeit erfolgt. Insbesondere ist es Aufgabe der Erfindung, den Flüssigkeitsdurchsatz von Packungslagen zu verbessern, deren Dichte größer ist als der darüber oder darunter liegenden Packungslagen.

Es wurde gefunden, dass sich der negative Einfluss der Schiefstellung von Packungselementen mit enger Geometrie dadurch verringern oder ganz beheben lässt, wenn man erfindungsgemäße neue Packungslagen einsetzt. Im Unterschied zu bisherigen Packungslagen mit ausschließlicher Verwendung von gewellten Bahnen, die alternierend gekreuzt aneinandergelegt werden, weisen diese Packungslagen Vorrichtungen für den bevorzugten Transport von Flüssigkeit auf.

Die in die gewellte Packungsstruktur eingefügten Vorrichtungen erzeugen definierte Ausflussstellen der Flüssigkeit auf die unter der Packungslage mit enger Geometrie befindliche Packung mit grober Geometrie. Die Vorrichtungen werden dabei bevorzugt so ausgeführt, dass möglichst kein Gas das Abtropfen der Flüssigkeit behindern kann.

Die Vorrichtungen können in beliebiger Geometrie ausgeführt werden, z. B. kreisförmig oder elliptisch, in Form von Rechtecken oder anderen Vielecken, wobei insbesondere auch langgestreckte Geometrien, beispielsweise Rechtecke, eingesetzt werden können.

Vorteilhafte Ausgestaltungen der Erfindung sind in den Unteransprüchen aufgeführt.

Ausführungsbeispiele der Erfindung sind in den Zeichnungen dargestellt und werden im folgenden näher beschrieben. Es zeigen
- Fig. 1: einen senkrechten Schnitt durch einen Ausschnitt einer Packung mit Packungslagen enger (1) und grober (2) Geometrie im Kolonnenmantel (3),
- Fig. 2: einen senkrechten Schnitt durch einen Ausschnitt einer Packungslage (1) mit enger Geometrie und eingefügten Speicherbehältern (4) für die gezielte Führung der Flüssigkeit (6), hierbei weist der Speicherbehälter (4) Ablauföffnungen (5) zum Ableiten der angestauten Flüssigkeit (6) auf,
- Fig. 3: einen senkrechten Schnitt durch einen Ausschnitt einer Packungslage (1) mit enger Geometrie und eingefügtem Speicherbehälter (4), in der die Ablauföffnungen (5) seitlich angebracht sind.
- Fig. 4: einen senkrechten Schnitt durch einen Ausschnitt einer Packungslage (1) mit enger Geometrie und eingefügtem Speicherbehälter (4), mit Ablauföffnungen (5, 7) in unterschiedlichen Höhen in der Seitenwand,

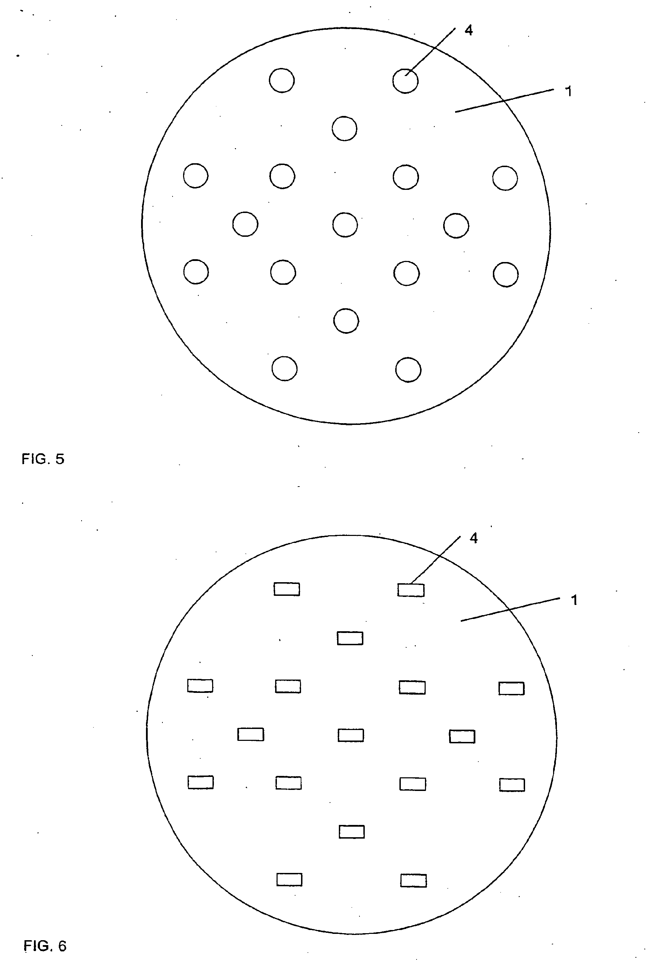

- Fig. 5: eine Darstellung der Packung (1) mit Speicherbehälter (4) in der Draufsicht, wobei die Speicherbehälter (4) einen kreisförmigen Querschnitt aufweisen, und
- Fig. 6: eine Darstellung der Packung (1) mit Speicherbehälter (4) in der Draufsicht, wobei die Speicherbehälter (4) hier einen rechteckigen Querschnitt aufweisen.

In einer Kolonne sind zwischen Packungslagen 2, 3 mit normaler oder niedriger Dichte Packungslagen 1 mit höherer Dichte als die darüber und/oder darunter befindlichen angeordnet. Hierbei ist die Höhe der dichteren Packungslage 1 geringer als die der weniger dichteren.

In der Packungslage 1 mit höherer Dichte sind gleichmäßig über deren Fläche verteilt Speicherbehälter 4 eingebracht, die an ihrer Oberseite vollständig oder teilweise offen sind und in ihrer Unterseite und/oder in ihren Seitenflächen Ausflussöffnungen 5, 7 aufweisen. Die Addition aller Öffnungsflächen aller Ausflussöffnungen 5, 7 ergeben eine Gesamt-Ausflussfläche, die kleiner ist als die Gesamt-Einlassfläche der oberen Einlassöffnung/en 8.

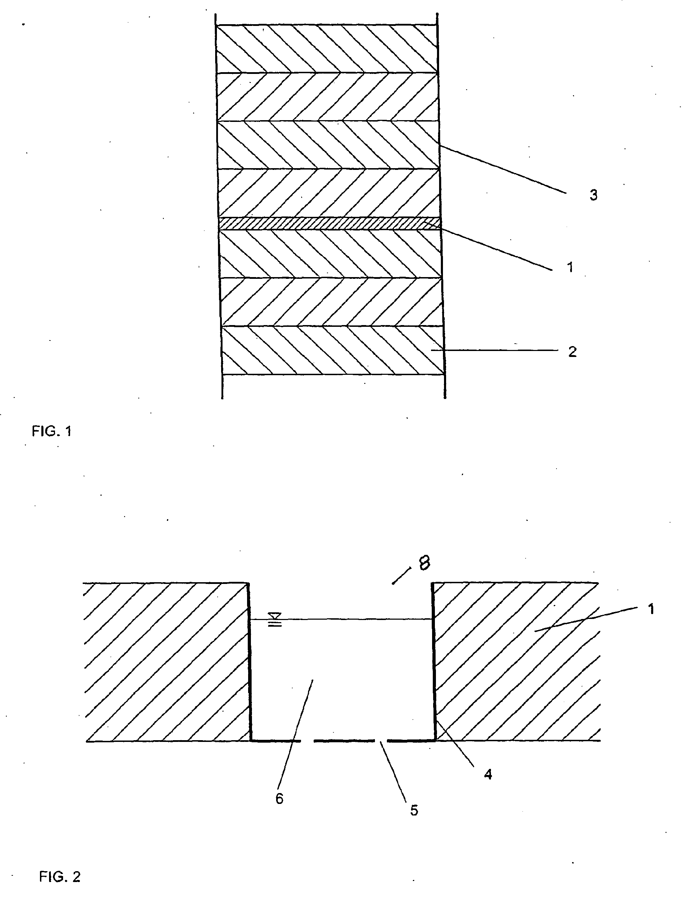

Eine bevorzugte Ausführung der Vorrichtungen für die Führung der Flüssigkeit sind runde Töpfchen 4 mit senkrechter/senkrechten Seitenwand/-wänden ähnlich Fig. 2. In diesen Töpfchen sind im Topfboden Löcher 5 vorgesehen. Die Größe der Löcher sowie deren Anzahl pro Topf richtet sich nach dem jeweiligen Einsatzfall und wird individuell berechnet. Die rechnerische Dimensionierung der Ablaufbohrungen/Ausflussöffnungen 5, 7 entspricht der Dimensionierung von Ablaufbohrungen in konventionellen Flüssigkeitsverteilvorrichtungen und ist dem Fachmann geläufig.

Besonders bevorzugt sind runde Töpfchen 4 mit möglichst kleinem Öffnungsdurchmesser und einer großen Anzahl von Ausflussöffnungen 5. Die Abmessungen der Töpfchen ist von der Gesamtmenge der Flüssigkeit und Art der Kolonnenaufgabe abhängig.

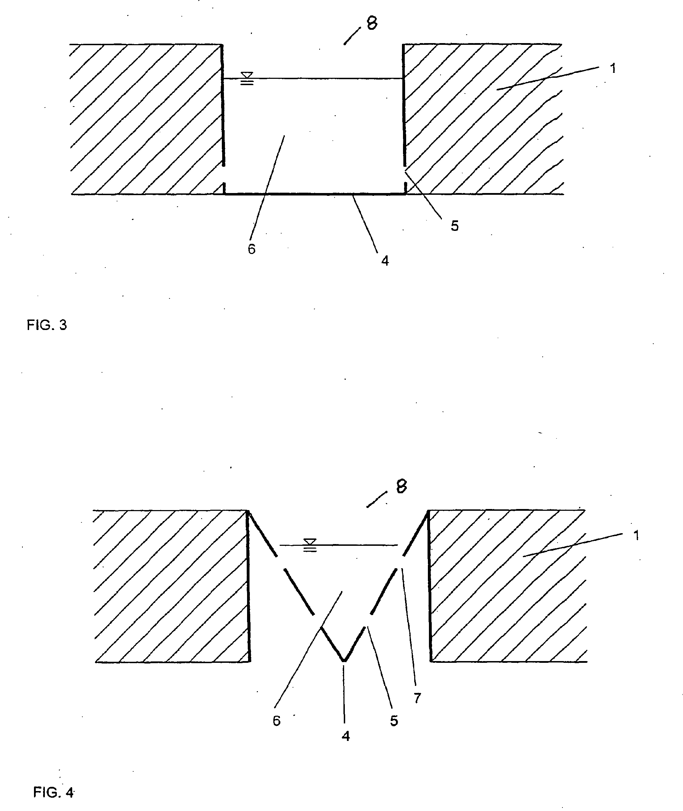

In der Fig. 4 gezeigten Ausführung weisen die Speicherbehälter 4 eine nach unten sich verjüngende Form auf, insbesondere sind sie konisch bzw. kegelig geformt. In der/den Seintenwand/Seitenwänden sind die Ausflussöffnungen 5, 7 angeordnet.

## Patentansprüche

1. Packung einer Kolonne für den Wärme- und/oder Stoffaustausch mit einzelnen insbesondere waagerechten Packungslagen, **dadurch gekennzeichnet, dass** innerhalb einer Packungslage (1) einzelne Speicherbehälter (4) angeordnet sind, die an ihrer Oberseite vollständig oder teilweise offen sind und in ihrer Unterseite und/oder in ihren Seitenflächen Ausflussöffnungen (5, 7) aufweisen und dass die Addition aller Öffnungsflächen aller Ausflussöffnungen (5, 7) eine Gesamt-Ausflussfläche ergibt, die kleiner ist als die Gesamt-Einlassfläche der oberen Einlassöffnung/en (8).

2. Packung nach Anspruch 1, **dadurch gekennzeichnet, dass** die Speicherbehälter (4) topfförmig sind.

3. Packung nach Anspruch 1 oder 2, **dadurch gekennzeichnet, dass** die Oberseite des Speicherbehälters (4) mehrere Einlassöffnungen aufweist, deren Durchmesser größer ist als der Durchmesser der Auslassöffnungen (5, 7).

4. Packung nach einem der vorherigen Ansprüche, **dadurch gekennzeichnet, dass** die Speicherbehälter (4) gleichmäßig über die Fläche der Packungslage (1) verteilt sind.

5. Packung nach einem der vorherigen Ansprüche, **dadurch gekennzeichnet, dass** die Speicherbehälter sich nach unten hin verjüngen.

6. Packung nach einem der vorherigen Ansprüche, **dadurch gekennzeichnet, dass** die Speicherbehälter (4) in Packungslagen (1) angeordnet sind, die eine größere Dichte und/oder eine eigene Geometrie aufweisen als mindestens eine darüber und/oder darunter befindliche Packungslage.

7. Packung nach Anspruch 6, **dadurch gekennzeichnet, dass** die Packungslage mit dem Speicherbehälter eine spezifische Oberfläche aufweist, die um den Faktor 1,5 bis 10, vorzugsweise um den Faktor 2 bis 3 größer ist als die Oberfläche der darüber (3) und/oder der darunter (2) liegenden Packungslage(n) (2, 3).

8. Packung nach einem der vorherigen Ansprüche, **dadurch gekennzeichnet, dass** die Speicherbehälter (4) einen höheren Flüssigkeitsdurchfluss pro Flächeneinheit aufweisen als zwischen den Speicherbehältern befindliche Bereiche derselben Packungslage (1).

9. Packung nach einem der vorherigen Ansprüche, **dadurch gekennzeichnet, dass** die Ausflussöffnungen (7) in den Seitenwänden in ihrer Größe über die Höhe der Seitenwand verschieden sind.

10. Packung nach einem der vorherigen Ansprüche, **dadurch gekennzeichnet, dass** die Speicherbehälter (4) aufweisende Packungslage (1) eine geringere Höhe aufweist als die Packungslagen (2, 3) ohne Speicherbehälter.

## Claims

1. Packing of a column for heat and/or mass exchange with individual special horizontal packing layers, **characterised in that** inside a packing layer (1) individual storage containers (4) are arranged, which are completely or partly open on the top and have outlet openings (5, 7) on the bottom and/or on the side and that the addition of all opening areas of all outlet openings (5, 7) gives a total outlet area, which is smaller than the total inlet area of the top inlet opening(s) (8).

2. Packing according to claim 1, **characterised in that** the storage containers (4) are in the shape of a pot.

3. Packing according to claim 1 or 2, **characterised in that** the top of the storage container (4) has several inlet openings, the diameter of which is greater than the diameter of the outlet openings (5, 7).

4. Packing according to one of the previous claims, **characterised in that** the storage containers (4) are distributed evenly over the area of the packing layer (1).

5. Packing according to one of the previous claims, **characterised in that** the storage containers taper towards the bottom.

6. Packing according to one of the previous claims, **characterised in that** the storage containers (4) are arranged in packing layers (1), which have a greater density and/or geometry than at least one packing layer above and/or below.

7. Packing according to clam 6, **characterised in that** the packing layer with the storage container has a specific surface, which is greater by a factor of 1.5 to 10, preferably by a factor of 2 to 3, than the surface of the packing layer(s) (2, 3) above (3) and/or below (2).

8. Packing according to one of the previous claims, **characterised in that** the storage containers (4) have a higher liquid flow per unit of area than areas of the same packing layer (1) located between the storage containers.

9. Packing according to one of the previous claims, **characterised in that** the outlet openings (7) in the side walls vary in size over the height of the side wall.

10. Packing according to one of the previous claims, **characterised in that** the packing layer (1) with storage containers (4) is lower in height than the packing layers (2, 3) without storage containers.

## Revendications

1. Garniture d'une colonne pour l'échange de chaleur et/ou de matière comprenant des couches de garniture individuelles, en particulier de niveau, **caractérisée en ce qu'**à l'intérieur d'une couche de garniture (1) sont disposés des réservoirs de stockage individuels (4) qui sont ouverts totalement ou en partie en leur côté supérieur et présentent dans leur côté inférieur et/ou dans leurs surfaces latérales des ouvertures d'écoulement (5, 7), et que l'addition de toutes les surfaces d'ouverture de toutes les ouvertures d'écoulement (5, 7) donne une surface d'écoulement totale qui est plus petite que la surface d'admission totale de la/des ouvertures d'admission (8) supérieures.

2. Garniture suivant la revendication 1, **caractérisée en ce que** les réservoirs de stockage(4) sont en forme de pot.

3. Garniture suivant l'une des revendications 1 et 2, **caractérisée en ce que** le côté supérieur du réservoir de stockage(4) présente plusieurs ouvertures d'admission dont le diamètre est plus grand que le diamètre des ouvertures d'écoulement (5, 7).

4. Garniture suivant l'une des revendications précédentes, **caractérisée en ce que** les réservoirs de stockage (4) sont régulièrement répartis sur la surface de la couche de garniture (1).

5. Garniture suivant l'une des revendications précédentes, **caractérisée en ce que** les réservoirs de stockage se rétrécissent vers le bas.

6. Garniture suivant l'une des revendications précédentes, **caractérisée en ce que** les réservoirs de stockage (4) sont disposés dans des couches de garniture (1) qui présentent une masse volumique et/ou une géométrie propre plus élevée qu'au moins une couche de garniture sus-jacente et/ou sous-jacente.

7. Garniture suivant la revendication 6, **caractérisée en ce que** la couche de garniture avec le réservoir de stockage présente une surface supérieure spécifique qui est plus grande du facteur 1,5 à 10, de préférence du facteur 2 à 3, que la surface de la/des couches de garniture (2, 3) sus-jacente/s (3) et/ou sous-jacente/s (2).

8. Garniture suivant l'une des revendications précédentes, **caractérisée en ce que** les réservoirs de stockage (4) présentent un débit de liquide par unité de surface plus élevé que des zones de la même couche de garniture (1) situées entre les réservoirs de stockage.

9. Garniture suivant l'une des revendications précédentes, **caractérisée en ce que** les ouvertures d'écoulement (7) dans les parois latérales diffèrent en dimension sur la hauteur de la paroi latérale.

10. Garniture suivant l'une des revendications précédentes,
**caractérisée en ce que** la couche de garniture (1) présentant des réservoirs de stockage (4) présente une hauteur plus faible que les couches de garniture (2, 3) sans réservoir de stockage.
